# EUROPÄISCHE PATENTANMELDUNG

(11) **EP 2 541 618 A1**
(43) Veröffentlichungstag der Anmeldung: **02.01.2013**
(21) Anmeldenummer: 11005398.0
(22) Anmeldetag: 01.07.2011
(51) Int. Cl.: H01L 31/042, F24J 2/52, F24J 2/46

(54) **Indach-Solarsystemanordnung**

(71) Anmelder: VM Edelstahltechnik GmbH, 58840 Plettenberg (DE)
(72) Erfinder: Mächtle, Daniel, 58840 Plettenberg (DE)
(74) Vertreter: Jakelski, Joachim

(57) **Zusammenfassung**

Eine Indach-Solarsystemanordnung für Fotovoltaik-Solarmodule in Plattenform mit Indachrahmen ist gekennzeichnet durch im Wesentlichen parallel zur First- bzw. Traufrichtung verlaufenden Trägerschienen (210, 250, 270) mit Aufnahmenuten oder Auflageschenkeln, in die an den Solarmodulen (110) angeordnete Federn (130) eingreifen bzw. auf denen sie aufliegen.

## Beschreibung

Die vorliegende Erfindung betrifft eine Indach-Solarsystemanordnung für Fotovoltaik-Solarmodule in Plattenform mit Indachrahmen.

### Stand der Technik

Indach-Solarsystemanordnungen sind aus dem Stand der Technik bekannt. So beschreibt beispielsweise die DE 82 12 100 U1 einen Dachstein zum einander überlappenden Bedecken geneigter Dachflächen. Der Dachstein weist die Gestalt eines Dachziegels auf. An ihm werden Solarelemente befestigt.

Auch aus der DE 10 2008 048 547 A1 geht ein Dachdeckungsmodul mit einem Modulkörper hervor, der in eine Hausdachbedeckung integrierbar ist sowie mit einer Fotovoltaikeinheit, die auf dem Modulkörper befestigt ist. Diese Modulkörper können auf Satteldächern in Ziegeldächer integriert werden.

Derartige Dachdeckungsmodule lassen sich zwar auf vorteilhafte Weise in Ziegeldächer integrieren, ihr Aufbau und ihre Herstellung ist jedoch aufwendig.

Die DE 20 2010 016 159 U1 offenbart eine Solardach- oder Solarfassaden-Konstruktion mit einer Fotovoltaikanlage mit Dachelementen aus Fasern, Zement, Beton, Ton, Metall, Kunststoff oder ähnlichen Materialien, die reihenweise zueinander versetzt und überlappend angeordnet sind. Der nicht überlappende Bereich weist Solarzellen auf, die zur Erzeugung von Strom über Kontaktmittel elektrisch miteinander verbindbar sind. Es ist eine überlappende Anordnung der Solarzellen vorgesehen, wobei die Solarzellen auf Dachelementen befestigt sind und die Dachelemente durch Sturmhaken gehalten werden. Auch in diesem Falle müssen die Solarzellen ähnlich wie bei den beiden vorgenannten Dachdeckungsmodulen auf den Dachelementen befestigt werden. Dies erfordert eine aufwendige Herstellung der Dachelemente und auch die Montage der Dachelemente auf dem Dach, beispielsweise durch Sturmhaken, gestaltet sich aufwendig.

Die DE 20 2009 005 145 U1 offenbart schließlich ein Fotovoltage-Solarmodul mit Indachrahmen als Indach-Solarsystemanordnung, bei dieser Indach-Solarsystemanordnung sind überlappende Solarmodule vorgesehen, die am Übergangsbereich durch eine Dichtung abgedichtet sind. Die Anordnung erfolgt dabei durch Befestigungsschenkel auf der Dachlattung. Dieser Aufbau weist den Nachteil auf, dass die Solarmodule an das Raster der Dachlattung angepasst werden müssen.

Der Erfindung liegt nun die Aufgabe zugrunde, eine gattungsgemäße Indach-Solarsystemanordnung dahingehend weiterzubilden, dass eine großflächige Indachanordnung der Solarmodule auf unterschiedlichen Dächern, insbesondere Satteldächern, auf einfache Weise und insbesondere ohne dass eine Anpassung der Solarmodule an die Dachkonstruktion erforderlich ist, ermöglicht wird.

### Offenbarung der Erfindung

### Vorteile der Erfindung

Diese Aufgabe wird durch eine Indach-Solarsystemanordnung für Fotovoltaik-Solarmodule in Plattenform mit Indachrahmen gelöst durch im Wesentlichen parallel zur First- bzw. Traufrichtung verlaufende Trägerschienen mit Aufnahmenuten, in die an den Solarmodulen angeordnete Federn eingreifen. Durch die Anordnung der Trägerschienen in First- und Traufrichtung, also senkrecht zur Dachgefällerichtung, ist in First- bzw. Traufrichtung eine praktisch beliebige Anordnung der Solarmodule möglich, ohne dass Rücksicht genommen werden muss auf die Dachkonstruktion, insbesondere auf die Anordnung der Dachsparren. Vielmehr wird jede Trägerschiene auf allen Dachsparren befestigt, was gleichzeitig der Erhöhung der Stabilität dient, wohingegen die Solarmodule aufgrund der Nut-Feder-Befestigungsweise gewissermaßen in den Trägerschienen in First-/Traufrichtung beliebig verschoben werden können.

Durch die in den abhängigen Ansprüchen aufgeführten Maßnahmen sind vorteilhafte Weiterbildungen und Verbesserungen der im unabhängigen Anspruch angegebenen Indach-Solarsystemanordnung möglich.

So sieht eine vorteilhafte Ausgestaltung vor, dass die Trägerschienen im Querschnitt im Wesentlichen T-förmig ausgebildet sind, wobei die firstseitig bzw. traufseitig abschließenden Trägerschienen jeweils auf einer Seite des zentralen T-Schenkels Aufnahmenuten aufweisen und wobei zwischen benachbarten Solarmodulen angeordnete Trägerschienen zu beiden Seiten des zentralen T-Schenkels höhenversetzt zueinander angeordnete Aufnahmenuten aufweisen. Die Ausbildung der Trägerschienen mit einem im Querschnitt im Wesentlichen T-förmigen Profil ermöglicht einerseits eine leichte Befestigung auf den Dachsparren, andererseits weist eine T-förmige Ausbildung der Trägerschienen eine hohe Stabilität auf.

Die Solarmodule werden dabei ähnlich wie Dachziegel überlappend angeordnet und bilden so gewissermaßen die Dachhaut. Zur Abdichtung und als Pufferelement ist vorzugsweise ein Dichtelement vorgesehen, welches den firstseitigen Rand der Solarmodule umgreift.

Diese Art der Dichtung ermöglicht das Übereinanderlegen von Solarmodulen bei gleichzeitig optimaler Abdichtung.

Zur seitlichen Verbindung aneinandergrenzender Solarmodule sieht eine sehr vorteilhafte Ausgestaltung vor, dass die Solarmodule im Wesentlichen senkrecht zur First- bzw. Traufrichtung verlaufende seitliche federartige Vorsprünge aufweisen, die in Nuten eines im Wesentlichen H-förmigen Modulverbinders unter Zwischenlage von Dichtelementen eingreifen. Auf diese Weise werden die Solarmodule seitlich, also parallel zur First- bzw. Traufrichtung miteinander verbunden und aneinander befestigt.

Die Dichtungen bestehen bevorzugt aus einem elastischen abdichtenden Material, beispielsweise aus Gummi oder einem Elastomer oder dergleichen.

### Kurze Beschreibung der Zeichnungen

Ausführungsbeispiele der Erfindung sind in den Zeichnungen dargestellt und in der nachfolgenden Beschreibung näher erläutert.

Es zeigen:
- Fig. 1: schematisch eine von der Erfindung Gebrauch machende Indach-Solarsystemanordnung;
- Fig. 2: eine Seitenansicht einer erfindungsgemäßen Indach-Solarsystemanordnung;
- Fig. 3: eine Detailansicht des in Fig. 2 mit G bezeichneten Details;
- Fig. 4: eine Detailansicht des in Fig. 2 mit H bezeichneten Details und
- Fig. 5: eine Detailansicht des in Fig. 2 mit I bezeichneten Details;
- Fig. 6: eine isometrische Ansicht von schräg oben einer erfindungsgemäßen Indach-Solarsystemanordnung;
- Fig. 7: eine Detailansicht des in Fig. 6 mit A bezeichneten Details;
- Fig. 8: eine Detailansicht des in Fig. 6 mit B bezeichneten Details;
- Fig. 9: eine Detailansicht des in Fig. 6 mit C bezeichneten Details;
- Fig. 10: eine Seitenansicht senkrecht zur First- bzw. Traufrichtung einer erfindungsgemäßen Indach-Solaranordnung und
- Fig. 11: eine Detailansicht des in Fig. 10 mit K bezeichneten Details;
- Fig. 12: eine teilweise weggebrochene Darstellung eines erfindungsgemäßen Fotovoltaik-Solarmoduls;
- Fig. 13: eine teilweise weggebrochene Seitenansicht senkrecht zur First-bzw. Traufrichtung eines erfindungsgemäßen Fotovoltaik-Solarmoduls;
- Fig. 14: ein erstes Dichtelement und
- Fig. 15: ein zweites Dichtelement.

### Ausführungsformen der Erfindung

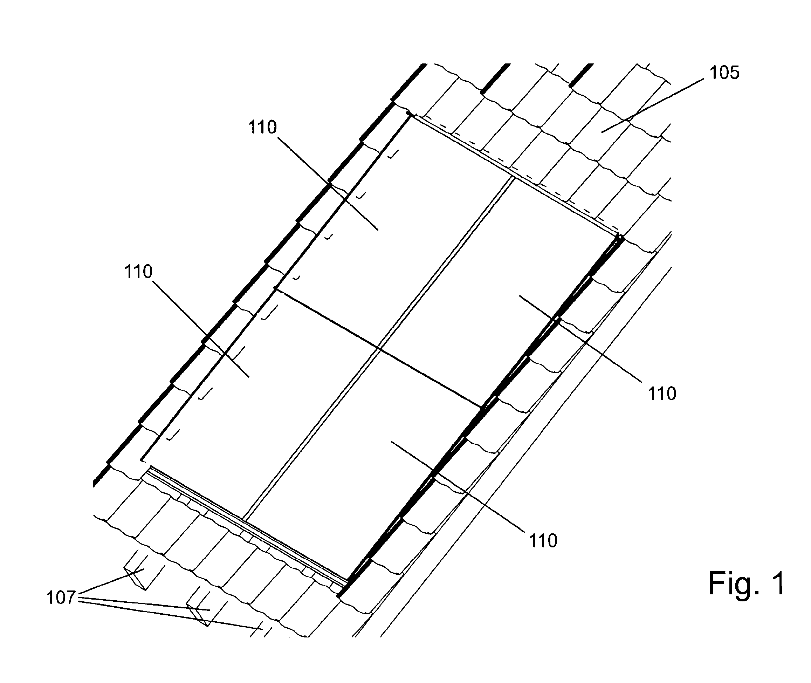

Eine erfindungsgemäße Indach-Solarsystemanordnung ist schematisch in isometrischer Darstellung in Fig. 1 gezeigt. In ein beispielsweise mittels Ziegeln gedecktes Satteldach 105, das eine an sich bekannte Unterkonstruktion mit Dachsparren 107 und (nicht sichtbaren) Dachlatten aufweist, an denen die Ziegel befestigt sind, ist eine Indach-Solarsystemanordnung von beispielsweise vier Fotovoltaik-Solarmodulen 110 integriert. Integriert bedeutet dabei, dass statt der Ziegel die Fotovoltaik-Solarmodule auf den Dachsparren 107 auf nachfolgend noch näher zu beschreibende Weise befestigt sind.

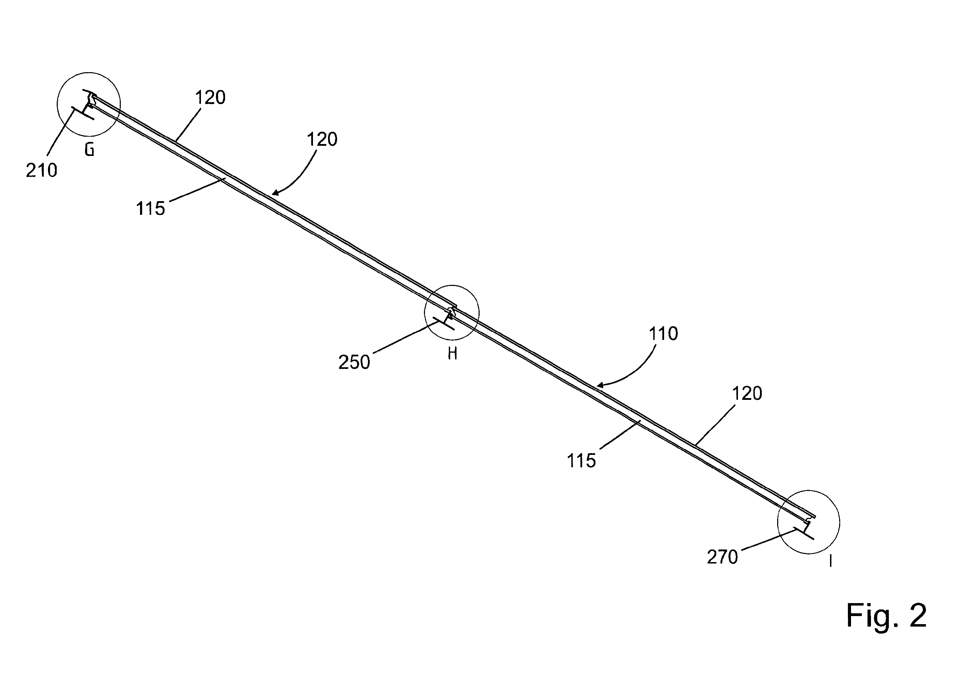

Fig. 2 zeigt eine Seitenansicht einer solchen Indach-Solarsystemanordnung. Diese umfasst Trägerschienen 210, 250, 270, an denen die Solarmodule 110 befestigt sind. Die Solarmodule 110 selbst bestehen aus einem Grundkörper 115, auf dem das Fotovoltaikelement 120 befestigt ist. Die Befestigung des Fotovoltaikelements 120 auf dem Grundkörper 115 erfolgt durch Kleben und geht beispielsweise aus der nicht vorveröffentlichten deutschen Patentanmeldung DE 10 2010 005 570.0, auf die insoweit Bezug genommen wird, hervor.

Wie bereits aus Fig. 2 ersichtlich ist, überlappen die Solarmodule ähnlich Dachziegeln im Grenzbereich, der in Fig. 2 mit H bezeichnet ist.

Die Trägerschienen 210, 250, 270 werden jeweils auf Dachsparren, die in Fig. 2 der besseren Übersichtlichkeit halber nicht dargestellt sind, befestigt.

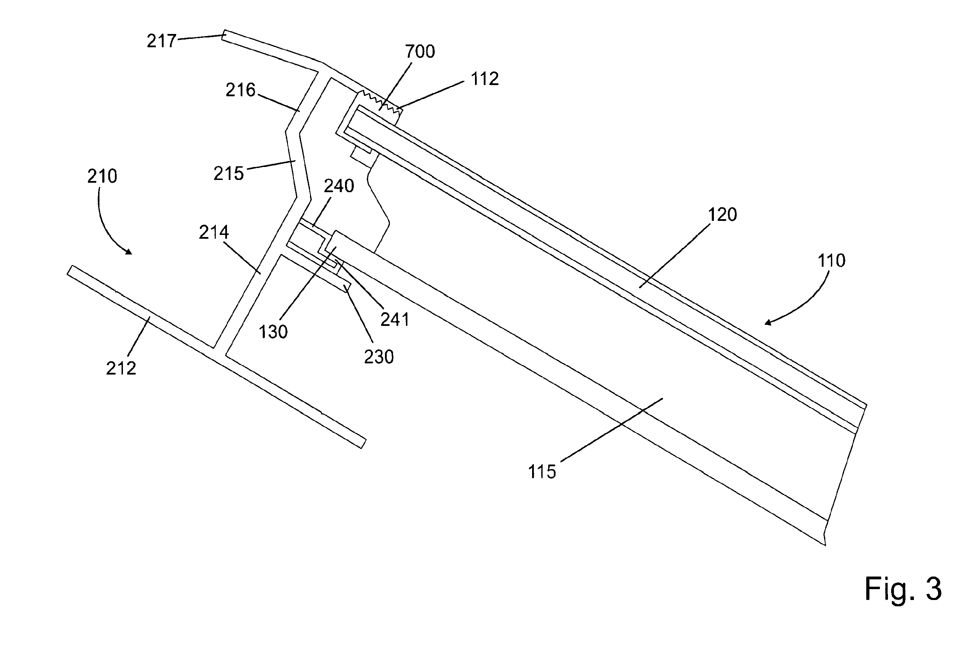

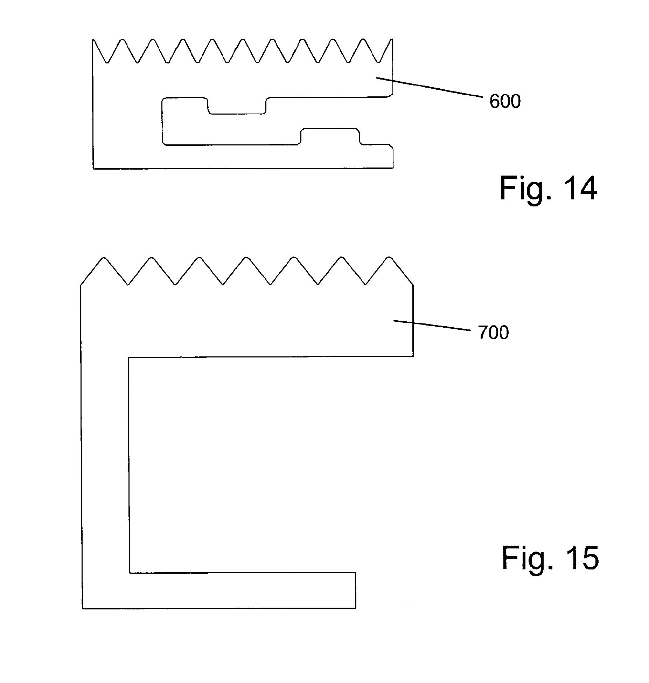

Die Trägerschienen sind je nach Anwendungsfall unterschiedlich ausgebildet. In Fig. 3 ist eine die Indach-Solarsystemanordnung firstseitig abschließende Trägerschiene 210 dargestellt. Die Darstellung in Fig. 3 entspricht einer Detaildarstellung des in Fig. 2 mit G bezeichneten Details. Sämtliche Trägerschienen weisen eine im Wesentlichen T-förmige Gestalt auf mit einem sparrenseitigen Schenkel 212 und einem von diesem im Wesentlichen senkrecht vorspringenden zentralen T-Schenkel 214. Der zentrale T-Schenkel 214 der firstseitigen Trägerschiene 210 weist einen gebogenen Bereich 215 auf, der in einen wiederum parallel versetzt zu dem zentralen T-förmigen Schenkel 214 verlaufenden Schenkel 216 mündet. Durch diese Abwinkelung wird Bauraum geschaffen für das Solarmodul 110, das einen randseitig vorspringenden Bereich aufweist, der von einer Dichtung 700 umschlossen ist. An dem versetzten Schenkel 216 ist ferner ein in Firstrichtung weisender Vorsprung 217 angeordnet, auf dem die (nicht dargestellten) Ziegel aufliegen. Auf seiner dem Solarmodul 110 zugewandten Seite weist die Trägerschiene 210 einen Auflageschenkel 230 auf, auf dem ein federartiger Vorsprung 130 des Modulkörpers 115 zur Auflage kommt. Der federartige Vorsprung 130 liegt dabei auf einem Befestigungselement 240 auf. Das Befestigungselement 240 dient gleichzeitig als Sicherungselement und der werkzeuglosen Befestigung des Solarmoduls 110. Die Befestigung geht dabei so vonstatten, dass das Befestigungselement 240 auf den Auflageschenkel 230 geschoben wird, während das Solarmodul 100 in Richtung des oberen Schenkels 112 gepresst wird, wobei hier die Dichtung 700 geringfügig deformiert wird. Nachdem das Befestigungselement 240 ganz "eingeschoben" ist, wird das Solarmodul unter Ausübung einer in Richtung des Schenkels 112 wirkenden Klemmkraft mit geringfügig deformiertem Dichtelement 700 gehalten. Aus diesem Grunde weist das Dichtelement 700 (Figur 15) an seiner Oberseite eine sägezahnförmige Gestalt auf, wodurch die gezielte Deformierung bei gleichzeitig optimaler Abdichtung erleichtert wird. Die Solarmodule 100 können also ohne Werkzeuge befestigt werden und damit schnell montiert werden. Das Befestigungselement 240 weist eine stufenförmige Gestalt auf, um einerseits einen Abstand in Gefällerichtung zu definieren und andererseits die beschriebene Klemmwirkung hervorzurufen. Die Höhe der Stufe 241, auf der der Vorsprung 130 aufliegt, ist dabei so bemessen, dass die Dichtung 700 gezielt deformiert wird und die erwähnte Klemmkraft auf den Schenkel 112 ausgeübt wird.

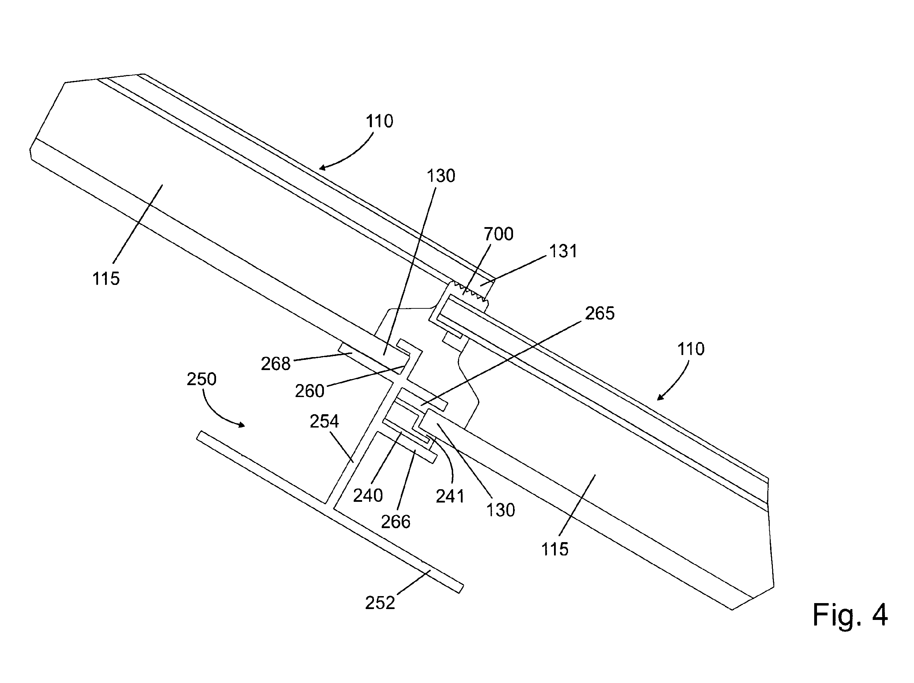

Eine Trägerschiene, die senkrecht zur Firstrichtung und damit in Gefällerichtung des Daches zwischen zwei Solarmodulen 110 angeordnet ist, ist in Fig. 4 zusammen mit den an ihr befestigten Solarmodulen 110 dargestellt. Fig. 4 stellt eine Detailvergrößerung des in Fig. 2 mit H bezeichneten Details dar. Die Trägerschiene 250 weist wiederum eine T-förmige Gestalt auf mit einem einem (nicht dargestellten) Dachsparren zugewandten Schenkel 252 und einem zentralen T-Schenkel 254. An dem zentralen T-Schenkel 254 sind Aufnahmenuten 260 bzw. 270 angeordnet, die insbesondere einstückig mit dem T-Schenkel 254 verbunden sind. Eine dieser Aufnahmenuten, die Aufnahmenut 260, weist in Richtung First, die andere Aufnahmenut, die Aufnahmenut 265, weist in Richtung Traufe. Die in Firstrichtung weisende Nut 260 ist senkrecht zur Dachoberfläche höher angeordnet gegenüber der in Richtung Traufe weisenden Nut 265. Es ist zu bemerken, dass statt einer Nut 265 rein prinzipiell auch lediglich ein Schenkel 266 genügt, auf den der federartige Vorsprung des Solarmoduls 110 auflegbar ist. Insoweit kann der obere Schenkel der Nut 265 auch vollständig entfallen. Der Höhenversatz ist dabei so gewählt, dass zwei Solarmodule im befestigten Zustand unter Einschluss der Dichtung 700 aufeinander zu liegen kommen, wobei die Dichtung 700, die in Fig. 15 im Detail dargestellt ist und im Wesentlichen C-förmige Gestalt aufweist, das Fotovoltaikelement stirnseitig umschließt und gleichzeitig so bemessen ist, dass das weitere Solarmodul 110 unter Ausübung eines gewissen Drucks auf dem elastisch ausgebildeten Dichtelement 700 zu liegen kommt. Die Dichtung 700 dient so auch als Pufferelement. Auf diese Weise wird eine Abdichtung gegenüber eintretendem Wasser, Schmutz und dergleichen bei höchst einfacher Montage erzielt. Der Druck, den das traufseitige Solarmodul 110 über die Dichtung auf das firstseitige Solarmodul 110 ausübt, wird hierbei wiederum durch das Befestigungselement 240 auf die vorstehend in Verbindung mit Fig. 3 beschriebene Weise ausgeübt.

Wie bereits der Fig. 3 aber auch der Fig. 4 zu entnehmen ist, weist der Grundkörper 115 der Solarmodule randseitig federartige Vorsprünge 130 auf, die in diesem Falle in Nuten 260, 277 eingreifen. Die Solarmodule 110 liegen nach Art von Ziegeln unter Einschluss der Dichtung 700 übereinander. Auf diese Weise ist ein Ablauf beispielsweise von Regenwasser sehr gut möglich.

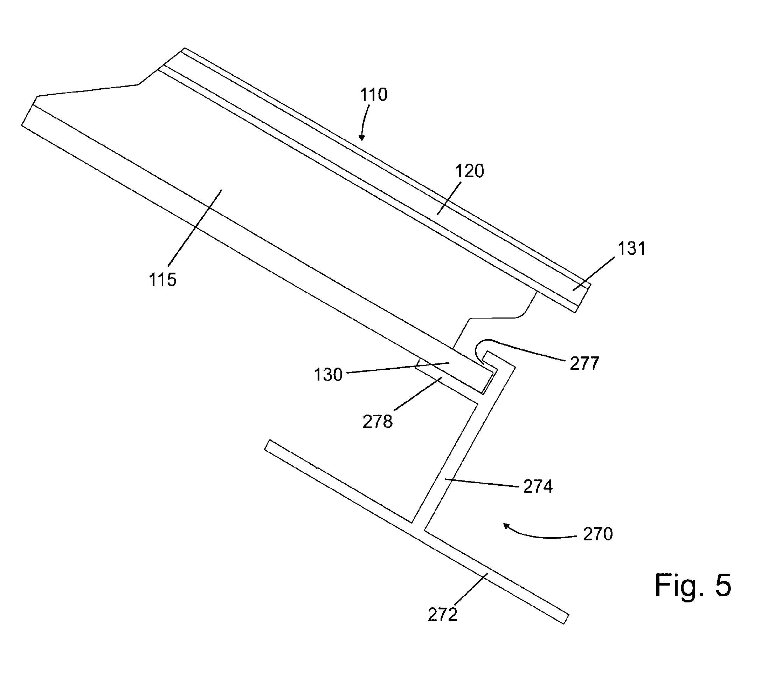

Fig. 5 zeigt eine die Indach-Solaranordnung traufseitig abschließende Trägerschiene 270. Fig. 5 stellt eine Detailvergrößerung des in Fig. 2 mit I bezeichneten Details dar. Die in Fig. 5 dargestellte Trägerschiene weist ebenfalls eine T-förmige Gestalt mit einem sparrenseitigen Schenkel 272 und einem zentralen T-Schenkel 274 auf. An dem zentralen T-Schenkel 274 ist eine Nut 277 ausgebildet und zwar auf der firstseitigen, also der dem First zugewandten Seite des Schenkels 274. In diese Nut 277 greift die Feder 130 des Modulkörpers 115 des Solarmoduls 110 ein. Diese Nut 277 - weist wie im übrigen auch die Nut 260 - einen geringfügig größeren Öffnungsquerschnitt auf als die Höhe der in sie eingreifenden Feder 130, um so eine geringfügige Drehung des Solarmoduls 110 im Falle seiner Befestigung durch das Befestigungselement 240 auf die vorstehend beschriebene Weise zu ermöglichen. Es ist an dieser Stelle noch einmal hervorzuheben, dass sämtliche Solarmodule 110 ohne Werkzeuge mit Hilfe der Nuten und des Befestigungselements 240 befestigbar sind.

Die Befestigung der Solarmodule an den Trägerschienen ist auf sehr einfache Weise möglich. Zunächst werden die Trägerschienen montiert. Es versteht sich, dass dabei der Abstand der Trägerschienen zueinander entsprechend gewählt wird, was ohne Weiteres möglich ist, da die Trägerschienen auf Dachsparren, die vom First zur Traufe verlaufen, befestigt werden und insoweit senkrecht zur Firstrichtung, also in Gefällerichtung praktisch beliebig verschiebbar sind. Im Bereich der Solarmodule 110 wird dabei auf die Dachlattung verzichtet, sodass die Trägerschienen 210, 250, 270 auf den Dachsparren in Gefällerichtung, also senkrecht zur First-/Traufrichtung verschoben werden können und der Abstand angepasst werden kann. Hierbei können beispielsweise auch Schablonen oder dergleichen zur präzisen und schnellen Einstellung des Abstands verwendet werden. Sodann werden die Solarmodule 110 an den Trägerschienen 210, 250, 270 befestigt. Dies geschieht beispielsweise dadurch, dass die firstseitige Feder 130 in die Nut 265 der Trägerschiene 250 eingelegt bzw. auf den Schenkel 266 gelegt wird und zwar zunächst ohne Befestigungselement 240. In diesem Falle kann das gesamte Solarmodul 110 in Gefällerichtung verschoben werden. Gleichzeitig liegt die traufseitige Feder 130 auf einem Nutschenkel 278 der Nut 277 der traufseitigen Trägerschiene 270 auf. Hierzu ist dieser Schenkel 278 länger ausgebildet, um das Aufliegen der Feder 130 zu ermöglichen. Das Solarmodul 110 rutscht dann aufgrund der Schwerkraft in die Nut 277 und anschließend wird dann mittels des Befestigungselements 240 das Solarmodul 110 unter Ausübung der Klemmkraft über die Dichtung 700 an das über ihm liegende Solarmodul 110 gedrückt und auf diese Weise an den Trägerschienen 270 und 250 gehalten.

In entsprechender Weise wird mit dem nächsten Solarmodul 110 verfahren, wobei hier wieder der der Dachoberfläche zugewandte Nutschenkel 268 der Nut 260 länger ausgebildet ist. Das firstseitig liegende Solarmodul 110 wird dabei - wie oben bereits ausgeführt - mittels des Befestigungselements 240 über die Dichtung 700 gegen den Schenkel 112 gedrückt.

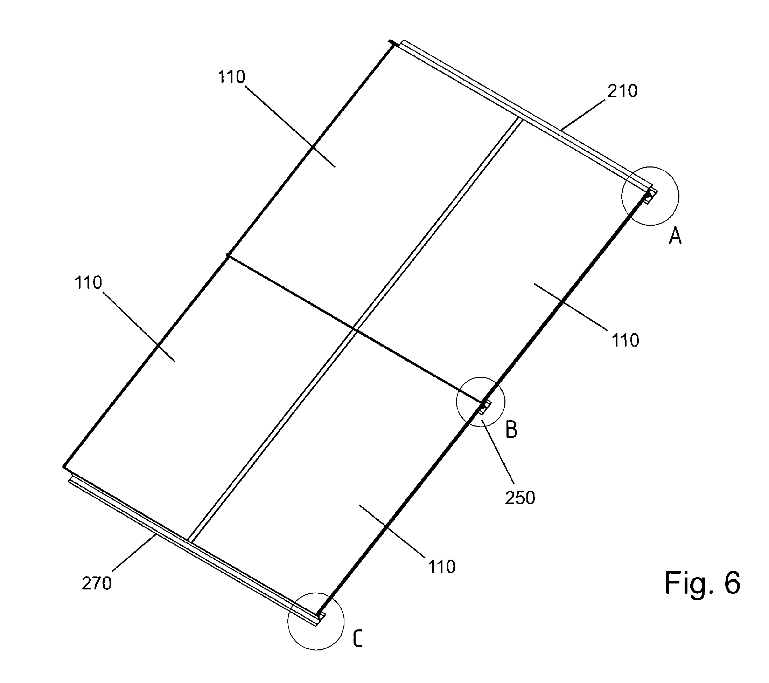

Im Folgenden wird anhand der Fig. 6 bis 11 der Aufbau einer Indach-Solarsystemanordnung parallel zur First- bzw. Traufrichtung erläutert. In Fig. 6 ist schematisch eine Indach-Solarsystemanordnung mit vier Solarmodulen 110 dargestellt, die auf den vorerwähnten Trägerschienen 210, 250, 270 auf die vorstehend beschriebene Weise befestigt sind.

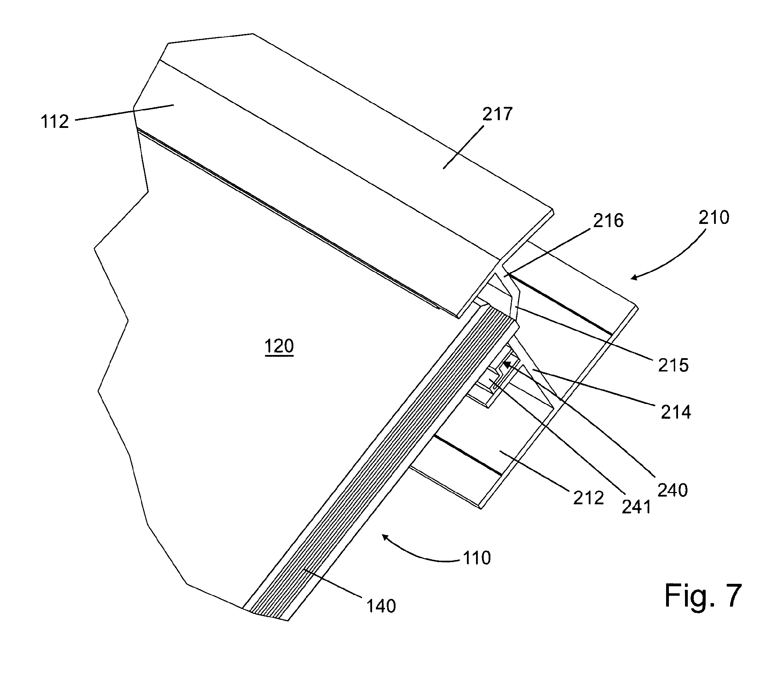

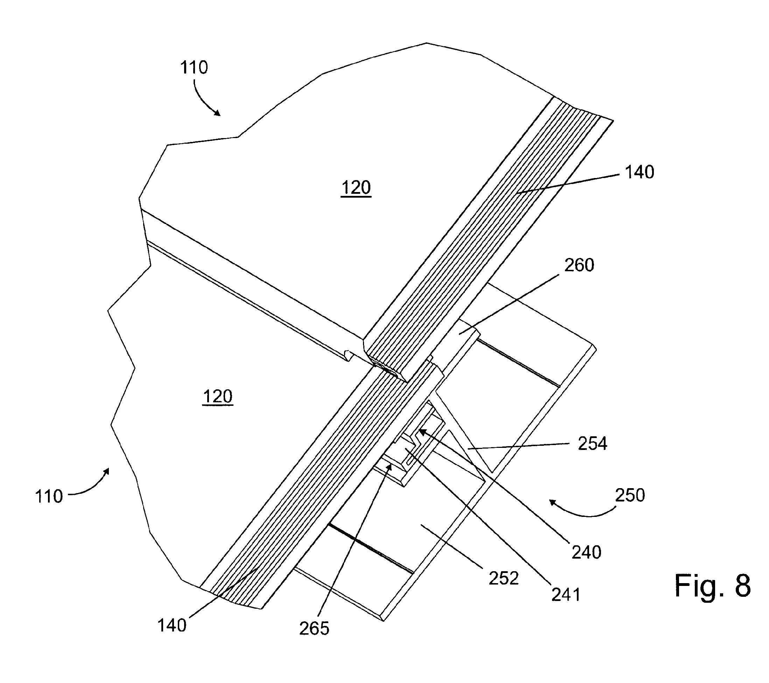

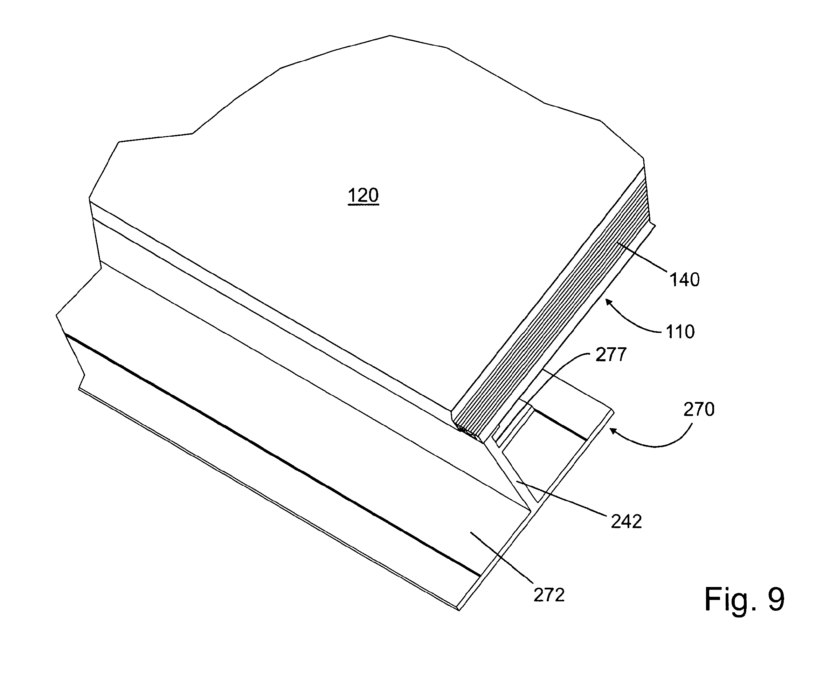

In Fig. 7 ist eine Detailvergrößerung des in Fig. 6 mit A bezeichneten Details in isometrischer Darstellung dargestellt. Fig. 7 zeigt die Draufsicht auf die Trägerschiene 210, der die Indach-Solarsystemanordnung firstseitig abschließt. In der Trägerschiene 210 ist das Solarmodul 110 angeordnet. Die Ansicht von schräg oben zeigt auf das Fotovoltaikelement 120. Wie Fig. 7 zu entnehmen ist, weist das Solarmodul 110 seitlich einen federartigen Vorsprung 140 auf, der von einer geriffelten Dichtung umschlossen ist. Diese federartigen Vorsprünge 140 dienen der seitlichen Befestigung weiterer Solarmodule 110. In Fig. 8 ist ein in Fig. 6 mit B bezeichnetes Detail vergrößert in isometrischer Darstellung gezeigt. Dabei sind an der Trägerschiene 250 auf die vorbeschriebene Weise zwei Solarmodule 110 befestigt, wobei die beiden Solarmodule 110 in Dachgefällerichtung, also senkrecht zur First- bzw. Traufrichtung überlappen. Beide Solarmodule 110 weisen federartige seitliche Vorsprünge 140 auf, die von geriffelten Dichtungen (Fig. 14) umschlossen sind. In Fig. 9 ist der traufseitige Abschluss der Indach-Solarsystemanordnung dargestellt. Fig. 9 zeigt die Trägerschiene 270 und ein auf ihr befestigtes Solarmodul 110 in isometrischer Ansicht von schräg oben in Blickrichtung auf das Fotovoltaikelement 120. Fig. 9 stellt eine Detailvergrößerung des in Fig. 6 mit C bezeichneten Details dar.

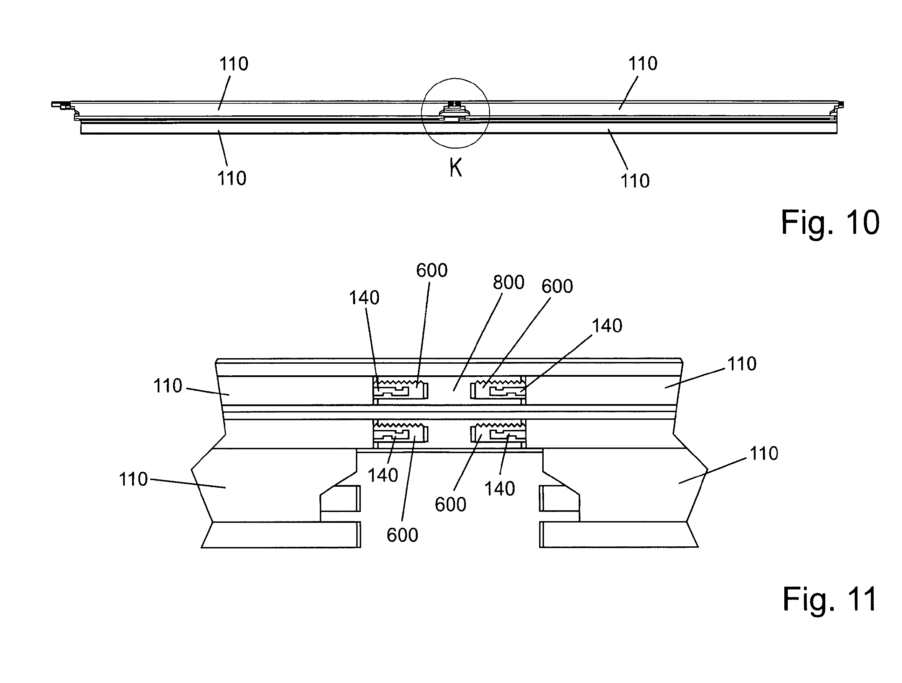

Fig. 10 illustriert den seitlichen Anbau weiterer Solarmodule in Dachrichtung von der Firstseite aus gesehen. Insgesamt zeigt die Ansicht vier nebeneinander und übereinander liegende Solarmodule 110, die im Mittelbereich, der in Fig. 10 mit K bezeichnet ist, aneinanderstoßen und dort befestigt und abgedichtet werden. Dies ist schematisch in Fig. 11, einer Detailvergrößerung des in Fig. 10 mit K bezeichneten Bereichs, dargestellt. Insgesamt sind vier Module 110 zu erkennen, wobei die Module 110 jeweils übereinanderliegen und auch nebeneinander angeordnet sind. Um sowohl die höhenversetzte Anordnung der Module 110 als auch die seitliche Anbindung der Module 110 berücksichtigen zu können, ist hierfür ein im Wesentlichen H-förmiges Verbindungselement 800 vorgesehen, wobei das "H" um 90° gedreht angeordnet ist. Dieses Verbindungselement 800 weist Öffnungen auf, in die die federartigen Vorsprünge 140 der Grundkörper 115 der Solarmodule 110 hineinragen. Diese Grundkörper sind mit Dichtungen 600 versehen, welche die Vorsprünge 140 umgreifen. Die Dichtungen 600 weisen an ihrer Oberseite, d.h. auf ihrer den Fotovoltaik-Elementen zugewandten Seite, die vorerwähnte Riffelung auf. Die Dichtelemente 600 sind elastisch ausgebildet und bestehen beispielsweise wie die Dichtung 700 aus Gummi, einem Elastomer oder dergleichen. Eine Dichtung 600 ist in Fig. 14 dargestellt. Auch diese Dichtungen 600 sind gleichzeitig Pufferelemente. Durch das Verbindungselement 800 und die Ausbildung der seitlichen federartigen Vorsprünge 140 in Verbindung mit den Dichtungen 600 ist eine seitliche Erweiterung der Indach-Solarsystemanordnung möglich, wobei gleichzeitig die höhenversetzte Anordnung der Solarmodule 110 berücksichtigt wird. Die Trägerschienen sind der besseren Übersichtlichkeit halber nicht dargestellt.

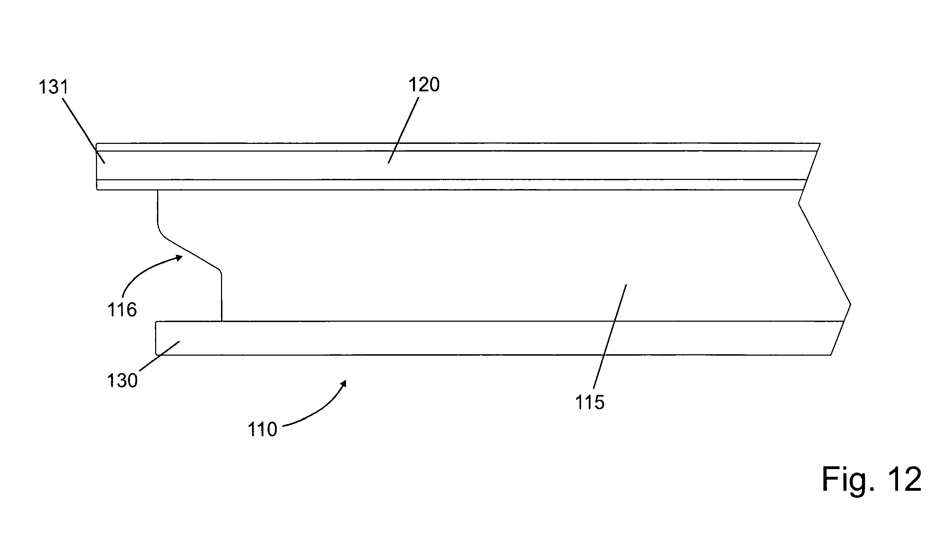

In Fig. 12 ist eine teilweise weggebrochene Darstellung eines Solarmoduls 110 gezeigt. Dieses besteht aus dem erwähnten Grundkörper 115, der an seiner Unterseite einen federartigen Vorsprung 130 aufweist. Auch an seiner Oberseite ist ein Vorsprung 131 vorgesehen. Der Grundkörper 115 weist darüber hinaus eine zurückversetzt schräg verlaufende Wandung 116 auf, die der leichten Handhabung des federartigen Vorsprungs 130 dient. Die Wandung 116 ist gegenüber dem federartigen Vorsprung 130 aber auch gegenüber dem Vorsprung 131 zurückversetzt.

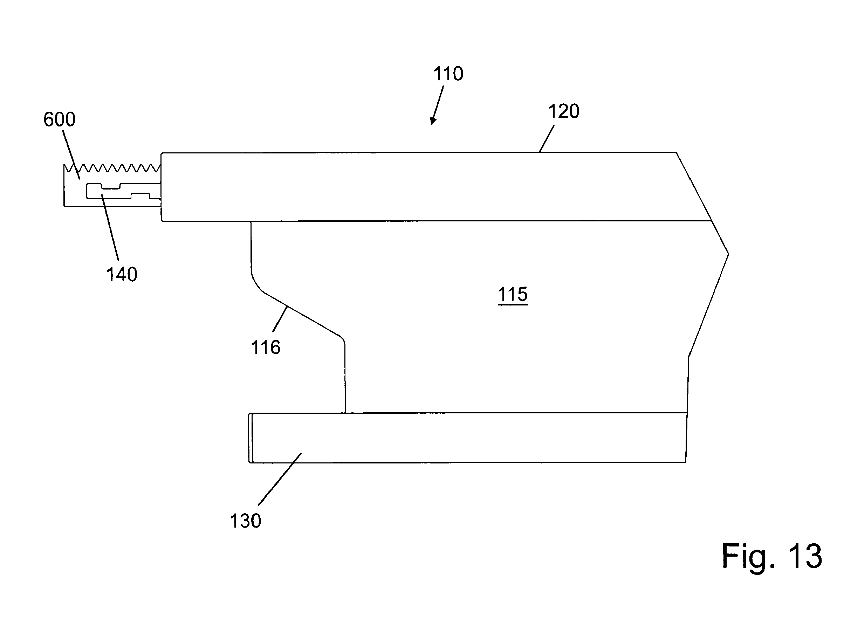

In Fig. 13 ist eine Seitenansicht eines erfindungsgemäßen Solarmoduls 110 in Dachgefällerichtung gesehen dargestellt. Neben dem Vorsprung 130 mit der schräg verlaufenden zurückversetzten Wandung 116 ist hier der Vorsprung 140 dargestellt, der von dem Dichtelement 600 umgeben ist und der der Befestigung (in der Zeichnung auf der linken Seite) eines weiteren (nicht dargestellten) Solarmoduls 110 dient.

Die Dichtungen 600 und 700 sind in den Figuren 14 und 15 dargestellt. Sie sind jeweils an die entsprechenden Bauteile der Solarelemente 110, an denen sie angeordnet sind, angepasst und weisen an ihrer Oberseite jeweils eine Riffelung auf.

## Patentansprüche

1. Indach-Solarsystemanordnung für Fotovoltaik-Solarmodule in Plattenform mit Indachrahmen, **gekennzeichnet durch** im Wesentlichen parallel zur First- bzw. Traufrichtung verlaufenden Trägerschienen (210, 250, 270) mit Aufnahmenuten oder Auflageschenkeln, in die an den Solarmodulen (110) angeordnete Federn (130) eingreifen bzw. auf denen sie aufliegen.

2. Indach-Solarsystemanordnung nach Anspruch 1, **dadurch gekennzeichnet, dass** die Trägerschienen (210, 250, 270) im Querschnitt im Wesentlichen T-förmig ausgebildet sind, wobei firstseitig bzw. traufseitig abschließende Trägerschienen jeweils auf einer Seite des zentralen T-Schenkels (214, 254, 274) Aufnahmenuten bzw. Auflageschenkel aufweisen und wobei zwischen benachbarten Solarmodulen angeordnete Trägerschienen (250) zu beiden Seiten des zentralen T-Schenkels (254) höhenversetzt zueinander angeordnete Aufnahmenuten (260, 265) bzw. Auflageschenkel (268) aufweisen.

3. Indach-Solarsystemanordnung nach Anspruch 1, **gekennzeichnet durch** ein Dichtelement (700), welches den firstseitigen Rand der Solarmodule umgreift.

4. lndach-Solarsystemanordnung nach einem der Ansprüche 1 bis 3, **gekennzeichnet durch** Befestigungselemente (240), die auf Nutenschenkel (230, 266) aufliegen, wobei die Befestigungselemente (240) stufenförmig ausgebildet sind und die Höhe der Stufe (241) so bemessen ist, dass im montierten Zustand der Solarmodule (110) eine Kraft im Wesentlichen senkrecht zur Dachoberfläche auf einen Schenkel (112) bzw. auf einen Vorsprung (131) eines weiteren Solarmoduls (110) ausgeübt wird.

5. Indach-Solarsystemanordnung nach Anspruch 4, **dadurch gekennzeichnet, dass** die Befestigungselemente (240) seitlich im Wesentlichen parallel zur First-/Traufrichtung in die Trägerschienen (210, 250) einschiebbar sind.

6. Indach-Solarsystemanordnung nach einem der vorstehenden Ansprüche, **dadurch gekennzeichnet, dass** die Solarmodule (110) seitliche federartige Vorsprünge (140) aufweisen, die in Nuten eines Modulverbinders (800) zur seitlichen Verbindung der Solarmodule miteinander eingreifen.

7. Indach-Solarsystemanordnung nach Anspruch 6, **dadurch gekennzeichnet, dass** die seitlichen federartigen Vorsprünge (140) von Dichtelementen (600) umschlossen sind.

8. Indach-Solarsystemanordnung nach Anspruch 6, **dadurch gekennzeichnet, dass** die Modulverbinder (800) eine im Wesentlichen H-förmige Gestalt zur simultanen Befestigung von sowohl neben- als auch übereinanderliegenden Solarmodulen (110) aufweisen.
